# EUROPÄISCHE PATENTANMELDUNG

(11) **EP 0 888 914 A2**
(43) Veröffentlichungstag der Anmeldung: **07.01.1999**
(21) Anmeldenummer: 98111815.1
(22) Anmeldetag: 26.06.1998
(51) Int. Cl.: B60H 1/00

(54) **Vorrichtung zur Führung der Abgase an Fahrzeugen**

(30) Priorität: 01.07.1997 DE 19727976
(71) Anmelder: Transport-Systemetechnik Aktiengesellschaft, 09648 Mittweida (DE)
(72) Erfinder: Melzer, Olaf, 09238 Auerswalde (DE)
(74) Vertreter: Findeisen, Andreas

(57) **Zusammenfassung**

Die Erfindung betrifft eine Vorrichtung zur Führung der Abgase an Fahrzeugen, die eine Karosserie aus Leichtbauwerkstoffen, eine brennstoffbetriebene Fahrzeugheizung sowie vorzugsweise einen elektromotorischen Fahrantrieb aufweisen. Es wird die Aufgabe gelöst, die Vorrichtung so zu gestalten, daß sie unmittelbar am Karosseriegrundkörper ohne Beschädigung der temperaturanfälligen Karosserie durch die Verbrennungsgase der Heizbrennstoffe angeordnet werden kann. Dies wird erreicht, indem die Vorrichtung einen kastenförmigen Grundkörper (1) aufweist, in dessen Innenraum ein Mischbehälter (2) derart angeordnet ist, daß zwischen der Innenwandung des Grundkörpers (1) und der Außenwandung des Mischbehälters (2) ein Zwischenraum (3) verbleibt, wobei in der Mantelfläche des Grundkörpers (1) mindestens eine, mit dem Zwischenraum (3) in Wirkverbindung stehende Lufteintrittsöffnung (4) ausgestaltet ist und wobei der Mischbehälter (2) an seiner, im Innenraum des Grundkörpers (1) angeordneten Stirnfläche einen Ventilator (5) aufweist, der mit dem Innenraum des Mischbehälters (2) in Wirkverbindung steht, während der Mischbehälter (2) an seiner entgegengesetzten Stirnfläche, die außerhalb der zugeordneten Mantelfläche des Grundkörpers (1) liegt, offen ausgestaltet ist und wobei das Abgasrohr (6) von der Fahrzeugheizung (7) ausgehend zunächst die Mantelfläche des Grundkörpers (1) und danach den Zwischenraum (3) durchdringend in einen, im Innenraum des Mischbehälters (2) angeordneten Schalldämpfer (8) mündet, von dem eine Ausströmöffnung in den Innenraum des Mischbehälters (2) führt.

## Beschreibung

Die Erfindung betrifft eine Vorrichtung zur Führung der Abgase an Fahrzeugen, die eine Karosserie aus Leichtbauwerkstoffen, eine brennstoffbetriebene Fahrzeugheizung sowie vorzugsweise einen elektromotorischen Fahrantrieb aufweisen, wobei für die Energieversorgung des Fahrantriebes im Fahrzeug mitgeführte, wiederaufladbare Batterien vorgesehen sind.

Fahrzeuge mit elektromotorischem Antrieb sind in verschiedenartigen Varianten bekannt. Allerdings sind die Einsatzgebiete bisher überwiegend auf Schienenfahrzeuge begrenzt, für deren Energieversorgung Stromschienen oder Stromleitungen benutzt werden können, die fest am vorgegebenen Streckenverlauf installiert sind. Hierbei ergeben sich kaum Einschränkungen bezüglich Reichweite, Geschwindigkeit und Fahrzeugausstattung.

Weniger günstig sind die Einsatzmöglichkeiten von Fahrzeugen, die ihre Antriebsenergie einer im Fahrzeug mitgeführten, wiederaufladbaren Batterie entnehmen. Obwohl sich einige Anwendungen (z.B. Gabelstapler) bewährt haben, wird ein umfangreicher Einsatz solcher Fahrzeugkonzepte von verschiedenen technischen Problemen behindert. Insbesondere für den aus ökologischen und logistischen Überlegungen interessanten Einsatz von Elektrofahrzeugen im städtischen und stadtnahen Bereich existieren bisher nur wenige Lösungsvorschläge, die für eine praktische Umsetzung im Alltagsbetrieb geeignet sind.

Das grundsätzliche Problem sind hierbei die technischen Parameter der Energiequelle. Aufgrund des relativ geringen Energievorrates der Batterien ist es zweckmäßig, geringe Fahrzeuggewichte zu realisieren. Dieser Forderung kann durch Verwendung von Leichtbauwerkstoffen, beispielsweise Konstruktion der Fahrzeugkarosserie aus glasfaserverstärkten Verbundwerkstoffen (GFK), entsprochen werden.

Ferner ist es vorteilhaft, die verfügbare Energie ausschließlich für den Fahrzeugantrieb einzusetzen. Diese Forderung läßt sich jedoch nur bedingt realisieren, weil für Beleuchtung und Signalgebung ebenfalls Elektroenergie benötigt wird. Für weitere Verbraucher ist allerdings die Verwendung anderer Energiequellen möglich. Zumindest für die energieintensive, jedoch nur zeitweise notwendige Heizung elektrobetriebener Fahrzeuge sind bereits verschiedene Lösungsvorschläge bekannt, die keine Elektroenergie benötigen. So kann gemäß DE 42 12 703 C 1 ein Dampfspeicher als Heizvorrichtung im Fahrzeug installiert werden. Diese Konstruktion ermöglicht zwar eine wirksame Heizung, nachteilig sind jedoch die zusätzlich notwendigen Baugruppen zur Beschickung des Speichers mit Dampf. Die DE 43 09 621 A 1 schlägt die Verwendung einer Hochtemperaturbatterie mit isolierendem Gehäuse und Kühlsystem vor, wobei die Abwärme des Kühlsystems zur Beheizung des Fahrzeuges ausgenutzt wird. Die Wirksamkeit ist in der kalten Jahreszeit allerdings nicht ausreichend, so daß eine zusätzliche Elektroheizung vorgesehen ist.

Aufgrund der Unzulänglichkeiten alternativer Heizungen werden gegenwärtig für Fahrzeuge mit Elektroantrieb überwiegend konventionelle Lösungen als Fahrzeugheizung eingesetzt, vorzugsweise unter Verwendung von Brennstoffen wie beispielsweise Diesel oder Gas. Derartige Lösungen gewährleisten einen zufriedenstellenden energetischen Wirkungsgrad und können den verfügbaren Einbaumöglichkeiten weitgehend angepaßt werden. Kritisch sind jedoch die hohen Temperaturen der Verbrennungsgase. Insbesondere bei der Verwendung von Fahrzeugkarosserien aus Leichtbauwerkstoffen ergeben sich erhebliche Einschränkungen für die Anordnung der Vorrichtung zur Ableitung der Abgase. Neben der Temperaturempfindlichkeit dieser Werkstoffe gegenüber den hohen Abgastemperaturen ergeben sich noch weitere Probleme: Aus konzeptionellen Überlegungen ist eine Niederflurbauweise zweckmäßig, diese ermöglicht jedoch kaum einen ausreichenden Abstand zwischen der Abgasführung und dem temperaturanfälligen Karosseriegrundkörper.

Aufgabe der Erfindung ist es, eine Vorrichtung zur Führung der Abgase an Fahrzeugen mit einer Karosserie aus Leichtbauwerkstoffen zu schaffen, die unmittelbar am Karosseriegrundkörper angeordnet werden kann. Insbesondere sollen jegliche Beschädigungen der temperaturanfälligen Karosserie durch die Verbrennungsgase der Heizbrennstoffe vermieden werden.

Diese Aufgabe wird durch eine Vorrichtung gelöst, die einen kastenförmigen Grundkörper aufweist, in dessen Innenraum ein Mischbehälter derart angeordnet ist, daß zwischen der Innenwandung des Grundkörpers und der Außenwandung des Mischbehälters ein Zwischenraum verbleibt, wobei in der Mantelfläche des Grundkörpers mindestens eine, mit dem Zwischenraum in Wirkverbindung stehende Lufteintrittsöffnung ausgestaltet ist und wobei der Mischbehälter an seiner, im Innenraum des Grundkörpers angeordneten Stirnfläche einen Ventilator aufweist, der mit dem Innenraum des Mischbehälters in Wirkverbindung steht, während der Mischbehälter an seiner entgegengesetzten Stirnfläche, die außerhalb der zugeordneten Mantelfläche des Grundkörpers liegt, offen ausgestaltet ist und wobei das Abgasrohr von der Fahrzeugheizung ausgehend zunächst die Mantelfläche des Grundkörpers und danach den Zwischenraum durchdringend in einen, im Innenraum des Mischbehälters angeordneten Schalldämpfer mündet, von dem eine Ausströmöffnung in den Innenraum des Mischbehälters führt. Vorteilhafte Ausgestaltungen sind in den Patentansprüchen 2. bis 4. beschrieben.

Die vorgeschlagene technische Lösung ist vorzugsweise für Elektrofahrzeuge in Niederflurbauweise mit einer Karosserie aus Leichtbauwerkstoffen (z.B. GFK) und mit einer Heizung auf Brennstoffbasis (z.B. Diesel) geeignet. Vorteile ergeben sich insbesondere durch die erreichte Verminderung der Abgastemperaturen, so daß die Vorrichtung optimal den jeweiligen Bauraumverhältnissen angepaßt werden kann.

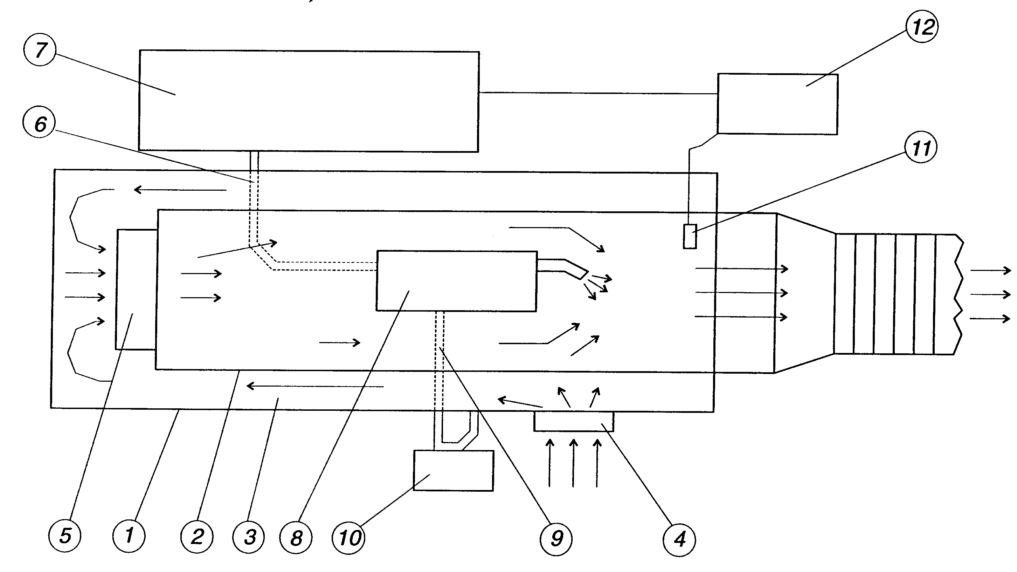

Ein Ausführungsbeispiel einer erfindungsgemäßen Vorrichtung ist in der Zeichnung dargestellt und wird nachfolgend beschrieben. Die gezeigte Vorrichtung kann grundsätzlich für verschiedene Fahrzeuge verwendet werden, die brennstoffbetriebene Baugruppen haben. Bevorzugter Einsatzzweck sind allerdings Fahrzeuge mit elektromotorischem Fahrantrieb, deren Antriebsenergie durch im Fahrzeug mitgeführte, wiederaufladbare Batterien bereitgestellt wird. Solche Fahrzeuge haben vorzugsweise eine Karosserie aus Leichtbauwerkstoffen und eine brennstoffbetriebene Heizung.

Die Vorrichtung weist einen kastenförmigen Grundkörper 1 auf. Im Innenraum dieses Grundkörpers 1 ist ein Mischbehälter 2 angeordnet. Hierbei verbleibt zwischen der Innenwandung des Grundkörpers 1 und der Außenwandung des Mischbehälters 2 ein Zwischenraum 3. In der Mantelfläche des Grundkörpers 1 ist mindestens eine Lufteintrittsöffnung 4 ausgestaltet, die mit dem Zwischenraum 3 in Wirkverbindung steht.

Der Mischbehälter 2 weist an einer Stirnfläche einen Ventilator 5 auf, der mit dem Innenraum des Mischbehälters 2 in Wirkverbindung steht. Für einen effektiven Luftdurchsatz und somit eine wirksame Verminderung der Abgastemperaturen ist es zweckmäßig, daß die Lufteintrittsöffnung 4 an der Mantelfläche des Grundkörpers 1 in größtmöglicher Entfernung vom Ventilator 5 ausgestaltet ist. An der zum Ventilator 5 entgegengesetzten Stirnfläche verläuft der Mischbehälter 2 bis in einen Bereich außerhalb der Mantelfläche des Grundkörpers 1. In diesem Bereich hat der Mischbehälter 2 eine Öffnung.

Das Abgasrohr 6 verläuft von der Heizungsbaugruppe 7 ausgehend zunächst durch die Mantelfläche des Grundkörpers 1 und danach durch den Zwischenraum 3 bis zu einem Schalldämpfer 8, der im Innenraum des Mischbehälters 2 angeordnet ist. Der Schalldämpfer 8 hat an der entgegengesetzten Seite eine Öffnung, durch die das Abgas in den Innenraum des Mischbehälters 2 strömem kann. Außerdem ist zumindest der Schalldämpfer 8 über ein Rohr 9 mit einem Behälter 10 zur Aufnahme von Kondensat verbunden.

Im Innenraum des Mischbehälters 2 ist ferner ein Temperaturfühler 11 angeordnet, dessen Meßwerte von einer Auswerteschaltung 12 verarbeitet werden. Mittels dieser Auswerteschaltung 12 kann die Heizung 7 geregelt werden. Dies ist zur Gewährleistung der Betriebssicherheit sinnvoll, damit bei eventuellen Störungen, z.B. Ausfall des Ventilators 5, der Betrieb der Heizung 7 unterbrochen werden kann.

Durch Anwendung der Vorrichtung wird das heiße Abgas mit kühlerer Außenluft vermischt und auf eine Temperatur (< 60°C) abgekühlt, die für den Karosseriewerkstoff unkritisch ist. Die Außenluft wird über den Ventilator 5 angesaugt und in den Mischbehälter 2 geblasen. Dabei wird der Mischbehälter 2 sowohl an seiner Außenwandung als auch in seinem Innenraum von kühler Luft umströmt und gekühlt. Durch die Anordnung des Ventilators 5 in Flußrichtung vor dem Abgasrohr 6 und dem Schalldämpfer 8 wird ein Hitzestau durch Abstrahlung der Rohr-und Schalldämpferwandung in diesem Bereich des Mischbehälters 2 vermieden. Die Abkühlung des Mischbehälters 2 und des Schalldämpfers 8 bewirken ein Unterschreiten des Taupunktes des Abgases und folglich ein Kondensieren. Das auftretende Kondensat wird im Kondensatbehälter 10 gesammelt und gesondert entsorgt. Somit wird die Schadstoffemission der brennstoffbetriebenen Heizung vorteilhaft reduziert. Die Außentemperatur der Wandung des Mischbehälters 2 bleibt im Bereich der Umgebungstemperatur und die Temperatur der das Abgas weiterführenden äußeren Baugruppen bleibt in Abhängigkeit des Luftdurchsatzes des Ventilators 5 unterhalb der für den Karosseriewerkstoff maximal zulässigen Temperatur.

## Patentansprüche

1. Vorrichtung zur Führung der Abgase an Fahrzeugen, die eine Karosserie aus Leichtbauwerkstoffen, eine brennstoffbetriebene Fahrzeugheizung sowie vorzugsweise einen elektromotorischen Fahrantrieb aufweisen, wobei für die Energieversorgung des Fahrantriebes im Fahrzeug mitgeführte, wiederaufladbare Batterien vorgesehen sind, dadurch gekennzeichnet,
daß die Vorrichtung einen kastenförmigen Grundkörper (1) aufweist, in dessen Innenraum ein Mischbehälter (2) derart angeordnet ist, daß zwischen der Innenwandung des Grundkörpers (1) und der Außenwandung des Mischbehälters (2) ein Zwischenraum (3) verbleibt, wobei in der Mantelfläche des Grundkörpers (1) mindestens eine, mit dem Zwischenraum (3) in Wirkverbindung stehende Lufteintrittsöffnung (4) ausgestaltet ist und wobei der Mischbehälter (2) an seiner, im Innenraum des Grundkörpers (1) angeordneten Stirnfläche einen Ventilator (5) aufweist, der mit dem Innenraum des Mischbehälters (2) in Wirkverbindung steht, während der Mischbehälter (2) an seiner entgegengesetzten Stirnfläche, die außerhalb der zugeordneten Mantelfläche des Grundkörpers (1) liegt, offen ausgestaltet ist und wobei das Abgasrohr (6) von der Fahrzeugheizung (7) ausgehend zunächst die Mantelfläche des Grundkörpers (1) und danach den Zwischenraum (3) durchdringend in einen, im Innenraum des Mischbehälters (2) angeordneten Schalldämpfer (8) mündet, von dem eine Ausströmöffnung in den Innenraum des Mischbehälters (2) führt.

2. Vorrichtung nach Anspruch 1, dadurch gekennzeichnet,
daß im Innenraum des Mischbehälters (2) ein Temperaturfühler (11) angeordnet ist, dessen Meßwerte von einer Auswerteschaltung (12) zur Regelung der Fahrzeugheizung (7) verarbeitet werden.

3. Vorrichtung nach Anspruch 1, dadurch gekennzeichnet,
daß die Lufteintrittsöffnung (4) an der Mantelfläche des Grundkörpers (1) in größtmöglicher Entfernung vom Ventilator (5) ausgestaltet ist.

4. Vorrichtung nach Anspruch 1, dadurch gekennzeichnet,
daß ein Behälter (10) zur Kondensataufnahme vorgesehen ist, der über ein Rohr (9) zumindest mit dem Schalldämpfer (8) verbunden ist.
